# FASCICULE DE BREVET EUROPEEN

(11) **EP 0 642 041 B1**
(45) Date de publication et mention de la délivrance du brevet: **02.06.1999**
(21) Numéro de dépôt: 94401919.9
(22) Date de dépôt: 30.08.1994
(51) Int. Cl.: G02B 6/122, G02F 1/025, G02B 6/30

(54) **Composant optique actif semi-conducteur à ruban**
Aktives optisches Halbleiter-Stegwellenleiterelement
Active optical ridge waveguide semiconductor element

(30) Priorité: 02.09.1993 FR 9310468
(43) Date de publication de la demande: 08.03.1995
(73) Titulaire: ALCATEL, 75008 Paris (FR)
(72) Inventeur: Vinchant, Jean-Francois, F-91680 Bruyères le Chatel (FR); Renaud, Monique, F-91530 Saint Cheron (FR); Erman, Marko, F-75012 Paris (FR)
(74) Mandataire: Lamoureux, Bernard

(56) Documents cités:
- PATENT ABSTRACTS OF JAPAN vol. 017, no. 010 (P-1466) 8 Janvier 1993 & JP-A-04 240 809 (FUJITSU LTD) 28 Août 1992
- PATENT ABSTRACTS OF JAPAN vol. 015, no. 237 (P-1216) 19 Juin 1991 & JP-A-03 073 905 (NIPPON TELEGR & TELEPH CORP ) 28 Mars 1991
- JOURNAL OF LIGHTWAVE TECHNOLOGY., vol.11, no.4, Avril 1993, NEW YORK US pages 582 - 588, XP000378013 Buus J et al 'Spot size expansion for laser-to-fiber coupling using an integrated multimode coupler'
- INTEGRATED OPTICAL CIRCUITS II, BOSTON, MA, USA, 10-11 SEPT. 1992, PROCEEDINGS OF THE SPIE - THE INTERNATIONAL SOCIETY FOR OPTICAL ENGINEERING, 1993, USA pages 179 - 184 Morasca S et al 'High efficiency coupling between semiconductor waveguides and single-mode optical fibers'
- APPLIED PHYSICS LETTERS., vol.SS, no.15, Octobre 1989, NEW YORK US pages 1495 - 1497, XP000094813 Deri R J et al 'Efficient fiber coupling to low-loss diluted multiple quantum well optical waveguides'
- OPTICS LETTERS., vol.16, no.5, Mars 1991, NEW YORK US pages 306 - 308, XP000176116 Thurston R N et al 'Two-dimensional control of mode size in optical channel waveguides by lateral channel tapering'

## Description

La présente invention concerne un composant semiconducteur à guide optique actif. Un tel composant comporte un guide pour une lumière à traiter. Ce guide est actif en ce sens qu'il est prévu pour modifier de manière commandée au moins une grandeur caractéristique de cette lumière, cette commande étant réalisée par un signal de nature électrique. Ce composant est semiconducteur pour permettre à ce signal de commande d'agir en modifiant une densité de porteurs de charges dans ce guide.

Un tel composant constitue typiquement un modulateur d'amplitude. Mais il peut aussi constituer un amplificateur ou un émetteur laser, ou encore un modulateur de phase, par exemple. Il doit être couplé à au moins un élément optique qui lui est externe et, typiquement, à deux tels éléments constitués chacun par une fibre optique.

Un tel composant comporte une plaquette semiconductrice. Cette plaquette définit trois directions longitudinale, transversale et verticale mutuellement perpendiculaires. Des longueurs, des largeurs et des épaisseurs sont définies selon ces directions, respectivement. Cette plaquette présente une face supérieure et une face inférieure horizontales. Elle s'étend entre deux faces extrêmes selon la direction longitudinale. L'une au moins de ces faces extrêmes constitue une face de couplage en regard de laquelle un élément optique externe tel qu'une fibre optique doit être placé pour réaliser un couplage entre cet élément externe et ce composant en ce qui concerne une lumière à traiter par ce composant. Cette plaquette comporte des couches horizontales présentant des épaisseurs et se succèdant en continuité cristalline selon la direction verticale. Ces couches constituent des structures incluant chacune une couche ou plusieurs couches adjacentes. Les compositions, les épaisseurs et l'ordre de succession des couches d'une telle structure constituent une séquence de couches de cette structure. Ces couches et structures sont les suivantes à partir de la face inférieure:
- Une structure de base présentant un premier type de conductivité. Au moins une partie supérieure de cette structure est constituée par une couche de confinement inférieure.
- Une structure de coeur comportant une couche à haut indice ayant un indice de réfraction accru par rapport aux matériaux environnants. Cette couche à haut indice a une épaisseur supérieure à celle d'un puits quantique et une composition lui conférant un intervalle d'énergie lui permettant d'être active vis-à-vis de cette lumière grâce à une interaction dépendant d'une densité de porteurs de charges dans cette couche.
- Une couche de confinement supérieure transparente pour la lumière à traiter. Cette couche est formée sur la structure de coeur et constitue avec la couche de confinement inférieure et cette structure de coeur une structure guidante. L'une des couches de cette dernière est limitée selon la direction transversale sur au moins une partie de son épaisseur pour former un ruban longitudinal. La lumière à traiter est guidée par la structure guidante selon cette direction longitudinale selon un mode guidé unique présentant une épaisseur. La valeur présentée dans la largeur du ruban par ladite densité de porteurs de charges commande l'interaction de la couche à haut indice avec la lumière de ce mode guidé de sorte que cette valeur constitue une densité de commande.
- Enfin une couche de commande est formée sur la couche de confinement supérieure. Cette couche de commande a un deuxième type de conductivité opposé au premier et une concentration de dopage accrue lui conférant une conductibilité électrique accrue pour permettre de faire commander la densité de commande par un signal de commande de nature électrique appliqué entre la structure de base et cette couche de commande. Cette concentration de dopage accrue rend cette couche de commande absorbante pour la lumière à traiter.

La couche de confinement supérieure a une épaisseur limitée pour que le signal de commande puisse commander effectivement la densité de commande. Elle a en même temps une épaisseur suffisamment grande par rapport à celle du mode guidé pour limiter l'absorption de la lumière dans la couche de commande.

Lorsqu'il est inclus dans un système optique de transmission ou de commutation, un composant de ce genre tel qu'un modulateur introduit des pertes d'insertion qui sont souvent élevées et que l'on cherche donc depuis longtemps à limiter. Ces pertes d'insertion se composent de pertes "de Fresnel", de pertes internes, et de pertes de couplage. Les pertes "de Fresnel" résultent de réflexions sur les faces de couplage d'entrée et de sortie du composant. Elles sont facilement et classiquement éliminées par un dépôt de couches anti-reflet sur ces faces. Les pertes internes résultent d'une absorption de lumière à l'intérieur du composant. Elles sont modérées parce que la séquence de couches de la structure guidante confére à un taux de confinement de cette structure une valeur suffisamment élevée, par exemple supérieure à 70%. Ce taux de confinement est le rapport de la puissance du mode guidé présente dans l'épaisseur de la structure de coeur à la puissance totale de ce mode. Mais elles deviendraient importantes dans la mesure où la lumière devrait se propager dans la couche de commande. Quant aux pertes de couplage elles résultent typiquement d'une inadaptation entre le mode lumineux interne guidé dans le composant et un mode lumineux externe plus large guidé dans un élément externe constitué par une fibre optique. Ces pertes de couplage sont classiquement diminuées par l'utilisation de fibres munies de lentilles. Mais, malgré cette utilisation, les pertes de couplage aux extrémités des structures actives minces classiques restent élevées (typiquement 5dB par face). C'est pourquoi des dispositions plus ou moins complexes sont mises en oeuvre pour réduire notamment ces pertes de couplage.

Une telle disposition est appliquée à un premier composant connu. Une structure guidante de ce composant est monomodale et comporte une seule couche à haut indice. Elle peut être appelée active parce que cette couche à haut indice est active. Cette couche peut être constituée par une succession de couches minces constituant chacune un puits quantique. Cette structure guidante active guide un mode dont l'épaisseur est choisie pour conférer une bonne efficacité à l'interaction recherchée tout en limitant les pertes internes résultant d'une absorption dans la couche de commande. Une épaisseur ainsi choisie est trop petite pour permettre un bon couplage à une fibre optique externe. Elle est typiquement comprise entre 0,4 µm et 0,6 µm. Un mode présentant une telle épaisseur peut être qualifié de "mince".

Ceci peut être illustré par l'exemple de deux structures possibles pour un tel composant connu. Les couches à haut indice de ces structures sont du type quaternaire GaInAsP entre des couches d'InP, le taux de confinement étant supérieur à 70%. Une structure à couche quaternaire d'indice relativement élevé correspond à une épaisseur de mode voisine de 0,4 µm et une structure à couche quaternaire d'indice relativement faible à une épaisseur de mode de 0,6 µm.

Ces deux structures possibles et d'autres structures réalisées selon la présente invention avec les mêmes matériaux seront décrites ci-après par leurs séquences de couches. Chaque couche sera définie entre deux parenthèses d'abord par son indice de réfraction n puis éventuellement par son épaiseur e, une indication sur la composition du matériau quaternaire étant en outre donnée par la longueur d'onde de coupure λg de ce matériau, c'est-à-dire par la longueur d'onde qui correspond à la bande d'énergie interdite de ce matériau.

Les deux structures indiquées ci-dessus sont les suivantes:
(n=3,17) (n=3,45 e=400nm, λg=1420nm) (n=3,17) et
(n=3,17) (n=3,29 e=600nm, λg=1110nm) (n=3,17).

Pour limiter les pertes de couplage d'un composant du genre de ce premier composant connu, sa structure guidante active est suivie, selon la longueur du composant, par une structure guidante passive également monomodale guidant un mode dont l'épaisseur est plus grande. Cette structure passive est constituée d'une seule couche de coeur. L'épaisseur du mode qu'elle guide est choisie pour limiter les pertes de son couplage avec une fibre optique externe ou avec un autre élément optique externe analogue à une telle fibre quant à ses caractéristiques de couplage. Une telle épaisseur est typiquement comprise entre 1 µm et 4 µm. Le mode qui la présente peut être qualifié d'"épais".

Pour éviter les pertes au couplage entre ces deux structures guidant deux modes mince et épais, on réalise entre elles une transition très progressive, dite "adiabatique" ou "taper". Ce premier composant connu est décrit dans un document "Efficient fiber-chip butt coupling using InGaAsP/InP waveguide tapers" L. Moeil, L. Ahlers, P. Albrecht, H. Engel, H.J. Hensel, H.P. Nolting and F. Reier, (0FC/I00C'93 Technical digest, ThK2, p.212-213 edited by Optical Society of America).

Un deuxième composant connu est décrit dans un document "New structure for efficiently coupling a waveguide to an optical fiber". - J. Haes, J. Willems, R.Baets, J Buus, and W.J. Stewart, (0FC/I000C'93 Technical Digest, WH8, p 118-119 édité par Optical Society of America).

D'autres examples peut être trouver dans Jap. Pat. Abstr. correspondant à JP-A-04-240 809 au Journal of Lightware Technology, Vol. 11, No.4, p. 582-588.

Une structure guidante active de ce deuxième composant connu comporte une couche à haut indice active et guide un mode unique "mince". C'est pourquoi, pour limiter les pertes de couplage, elle est remplacée, au voisinage de chaque face de couplage, sans zone de transition, par une structure passive composite constituée par trois couches à haut indice superposées séparées par des couches diluantes à indices de réfraction plus faibles. Trois modes peuvent être guidés par ces trois couches à haut indice, respectivement, avec des vitesses de phase différentes. Ils sont excités tous les trois par le mode unique mince, avec des phases initiales respectives. Moyennant des choix convenables des valeurs des paramètres optiques pertinents, c'est-à-dire des indices de réfraction et des épaisseurs des couches, ces trois modes guidés arrivent à la face de couplage avec des phases relatives telles que leur ensemble est localement équivalent à un mode "épais" permettant de réaliser avec de faibles pertes un couplage à une fibre optique.

Les dispositions adoptées dans ces premier et deuxième composants connus sont efficaces car elles permettent de limiter à la fois, grâce au mode mince, les pertes internes au composant et, grâce au mode épais, les pertes de couplage. Mais elles présentent l'inconvénient d'être coûteuses à réaliser.

La présente invention a notamment pour but de limiter d'une manière simple et peu coûteuse l'ensemble des pertes d'insertion d'un composant semiconducteur du genre précédemment décrit.

Dans ce but elle a pour objet un composant optique actif semiconducteur selon la revendication 1.

A l'aide des figures schématiques ci-jointes, on va décrire plus particulièrement ci-après, à titre non limitatif, comment la présente invention peut être mise en oeuvre. Lorsqu'un même élément est représenté sur plusieurs figures il y est désigné par un même signe de référence.

La figure 1 représente une vue en perspective d'un composant selon cette invention.

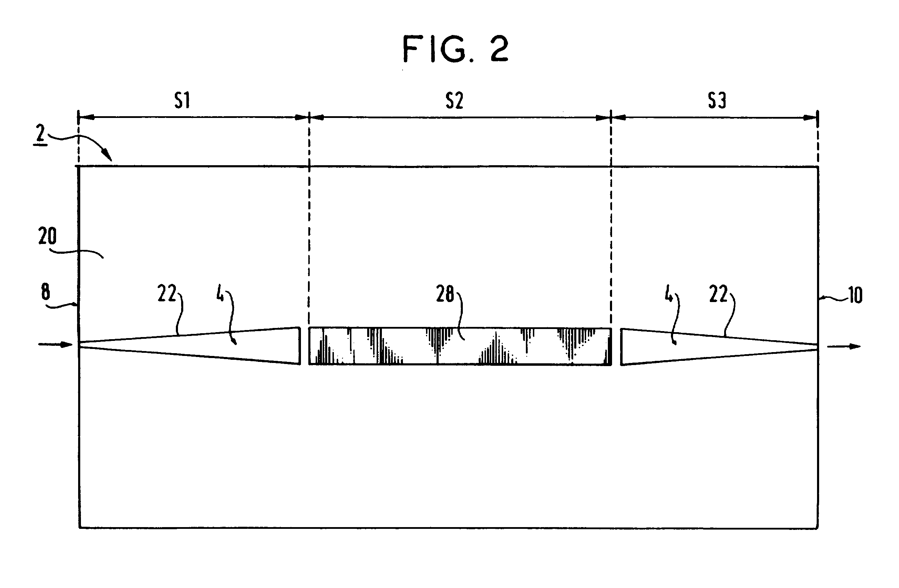

La figure 2 représente une vue de dessus du composant de la figure 1.

La figure 3 représente une vue en coupe partielle de ce composant pour montrer les profondeurs et épaisseurs de couches de ce composant.

La figure 4 représente un diagramme d'intensité lumineuse du mode guidé par ce composant, en fonction de la profondeur dans ce composant, cette intensité étant portée en abscisse et cette profondeur étant portée en ordonnée en correspondance avec la figure 3.

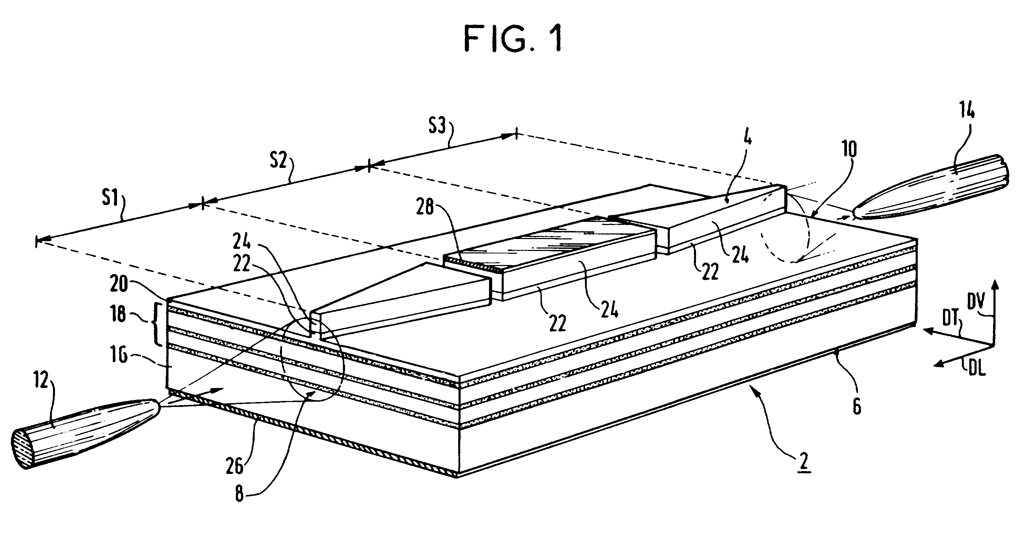

Conformément à la figure 1, le composant donné en exemple comporte une plaquette semiconductrice 2 définissant trois directions longitudinale DL, transversale DT et verticale DV mutuellement perpendiculaires, et des plans horizontaux perpendiculaires à cette direction verticale. Des longueurs, des largeurs et des épaisseurs sont définies selon ces directions longitudinale, transversale et verticale, respectivement. Cette plaquette présente une face supérieure 4 et une face inférieure 6 horizontales. Elle s'étend entre deux faces extrêmes selon la direction longitudinale, ces faces constituant deux faces de couplage. Un élément optique externe constitué par une fibre optique lentillée 12 ou 14 est placé en regard de chaque face de couplage pour réaliser un couplage entre cet élément externe et ce composant en ce qui concerne une lumière à traiter par ce composant. La plaquette 2 est constituée de couches horizontales présentant des épaisseurs et se succèdant en continuité cristalline selon la direction verticale en constituant des structures incluant chacune une couche ou plusieurs couches adjacentes. Les compositions, les épaisseurs et l'ordre de succession des couches d'une telle structure constituent une séquence de couches de cette structure. Ces couches et structures sont les suivantes à partir de la face inférieure 6:
- Une structure de base 16 présentant un premier type de conductivité, par exemple le type n. Au moins une partie supérieure de cette structure, par exemple sa totalité, est constituée par une couche de confinement inférieure. Cette couche est transparente, c'est-à-dire transparente pour la lumière à traiter.
- Une structure de coeur transparente 18 comportant des couches à haut indice ayant chacune un indice de réfraction accru par rapport aux matériaux environnants, et une épaisseur supérieure à celle d'un puits quantique. La composition de ces couches leur confére un intervalle d'énergie leur permettant d'être actives vis-à-vis de la lumière grâce à une interaction dépendant d'une densité de porteurs de charges dans ces couches.
- Une couche de confinement supérieure 20, 22 transparente formée sur la structure de coeur. Cette couche constitue avec la couche de confinement inférieure et la structure de coeur une structure guidante 16, 18, 20, 22. Au moins une couche de cette structure guidante est limitée selon la direction transversale sur au moins une partie de son épaisseur pour former un ruban 22, ce ruban ayant une largeur et s'étendant selon la direction longitudinale, de manière que la lumière à traiter soit guidée de manière monomodale par la structure guidante selon cette direction longitudinale selon un mode guidé unique présentant une largeur en rapport avec celle de ce ruban. Ce mode présente d'autre part une épaisseur. La valeur présentée dans la largeur de ce ruban par ladite densité de porteurs de charges commande l'interaction des couches à haut indice avec la lumière de ce mode guidé de sorte que cette valeur constitue une densité de commande.
- Enfin une couche de commande 24 est formée sur la couche de confinement supérieure 20, 22 dans un segment actif S2 occupant une partie de la longueur de la plaquette 2. Cette couche de commande présente le deuxième type de conductivité par exemple le type p. Elle présente une concentration de dopage accrue lui conférant une conductibilité électrique accrue pour permettre de faire commander ladite densité de commande par un signal de commande de nature électrique appliqué entre la structure de base 16 et cette couche de commande 24. Cette concentration de dopage accrue rend cette couche de commande absorbante pour la lumière à traiter.

La couche de confinement supérieure 20, 22 présente une épaisseur limitée pour que le signal de commande puisse commander effectivement la densité de commande. Elle a en même temps une épaisseur suffisamment grande par rapport à celle du mode guidé pour limiter l'absorption de la lumière de ce mode dans la couche de commande.

Des électrodes inférieure 26 et supérieure 28 sont formées respectivement sur les faces inférieure 6 et supérieure 4 dans le segment actif S2 pour appliquer le signal de commande entre la structure de base et la couche de commande.

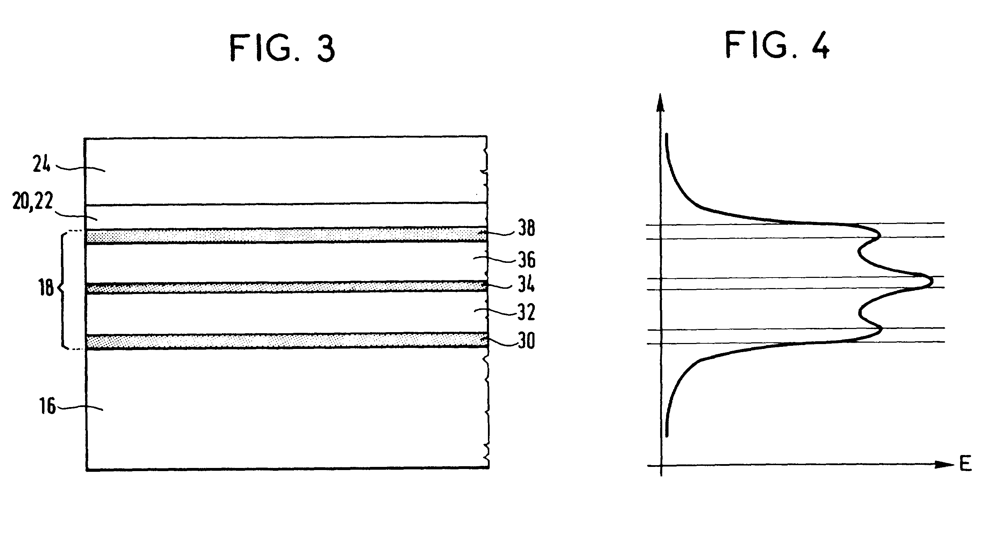

Plus particulièrement, conformément à la figure 3, la structure de coeur 18 comporte au moins les couches suivantes à partir de la couche de confinement inférieure 16 jusqu'à la couche de confinement supérieure 20, 22:
- une couche à haut indice inférieure 30,
- une couche diluante inférieure 32 présentant un indice de réfraction plus faible que cette couche à haut indice,
- une couche à haut indice médiane 34,
- une couche diluante supérieure 36 présentant un indice de réfraction plus faible que ces couches à haut indice,
- et une couche à haut indice supérieure 38.

La séquence de couches de la structure guidante 16, 18, 20, 22 est telle que le mode guidé unique constitue un mode épais présentant une épaisseur adaptée à un couplage à un dit élément optique externe. La structure guidante s'étend longitudinalement sans changement de sa séquence de couches dans le segment actif S2 et jusqu'à chaque face de couplage 8, 10.

Plus particulièrement la séquence de couches de cette structure confére à son taux de confinement une valeur supérieure à 70% et au mode guidé une épaisseur comprise entre 1 µm et 2 µm.

Plus particulièrement encore les couches à haut indice 30, 34, 38 présentent d'une part, par rapport aux couches diluantes 32, 36 et de confinement 16, 20, 22, un écart d'indice de réfraction supérieur à 0,15, d'autre part des épaisseurs individuelles supérieures à 30nm de manière à concentrer la lumière dans ces couches pour favoriser ladite interaction. Les épaisseurs individuelles de ces couches à haut indice sont par ailleurs inférieures à 300nm pour que le mode guidé soit unique.

Un rapport de dilution peut être défini comme le rapport de l'épaisseur totale de la structure de coeur 18 à l'épaisseur totale des seules couches à haut indice. Ce rapport de dilution est supérieur à 2 pour conférer au mode guidé une épaisseur souhaitable telle que précédemment indiqué.

De préférence une structure globale incluant toutes les couches semiconductrices 16...24 de la plaquette 2 présente une séquence de couches constante dans le segment actif S2 et jusqu'à chaque face de couplage 8, 10.

La plaquette 2 présente en outre selon sa longueur un premier et un deuxième segments de couplage S1 et S3 s'étendant entre d'une part le segment actif S2 d'autre part les faces de couplage 8 et 10 respectivement. L'électrode supérieure 28 est formée seulement dans le segment actif S2.

La largeur du ruban 22 peut, comme représenté, diminuer progressivement dans chaque segment de couplage S1 ou S3 à partir du segment actif S2 jusqu'à la face de couplage 8 ou 10. Cette diminution permet d'augmenter l'épaisseur du mode guidé dans cette face et éventuellement d'utiliser des fibres clivées au lieu des fibres lentillées 12 et 14.

Conformément à la figure 1, la couche limitée selon la direction transversale est la couche de confinement supérieure 20, 22, ou plus précisément la partie supérieure de l'épaisseur de cette couche constituant le ruban 22. La couche de commande 24 et l'électrode supérieure 28 sont présentes seulement dans l'étendue du ruban 22 pour constituer une structure guidante du type connu dit à ruban gravé.

La couche limitée selon la direction transversale pourrait cependant être aussi, par exemple, la couche à haut indice médiane de manière à constituer une structure guidante d'un autre type connu dit à ruban enterré.

Plus particulièrement encore on va décrire ci-après deux structures guidantes de composants selon la présente invention.

Une première structure a une épaisseur de mode voisine de 1,2 µm. Sa séquence de couches est:
- (couche 16: n=3,17) (couche 30: n= 3,45, e= 110nm, λg=1420nm) (couche 32: n= 3,17, e= 300nm) (couche 34: n=3,45, e= 50nm, λg= 1420nm), cette séquence étant symétrique, c'est-à-dire que les couches 36; 38 et 20 correspondent aux mêmes valeurs que celles indiquées pour les couches 32, 30 et 16, respectivement.

Une deuxième structure a une épaisseur de mode voisine de 1,7 µm. Sa séquence est également symétrique. Elle est comme suit:
(couche 16: n= 3,17) (couche 30: n= 3,29 e= 170nm, λg= 1110nm) (couche 32: n= 3,17, e= 400nm) (couche 34: n= 3,29, e= 120 nm, λg= 1110nm).

Pour ces deux structures le rapport de dilution est voisin de 2,7.

Une troisième structure selon la présente invention a été réalisée sur un substrat n+ ou semi-isolant. Elle est constituée de bas en haut d'un buffer d'InP (couche 16) d'épaisseur 1 µm dopé n(∼10¹⁷ cm⁻³), d'une couche 30 de GaInAsP d'épaisseur 0.15 µm dopée n (∼10¹⁷cm⁻³), d'une couche 32 d'InP d'épaisseur 0.3 µm dopée n (∼10¹⁷ cm⁻³) ou non intentionnellement dopée, d'une couche 34 de GaInAsP d'épaisseur 0.1 µm dopée n (∼10¹⁷ cm⁻³), d'une couche d'InP 36 d'épaisseur 0.3 µm non intentionnellement dopée, d'une couche 38 de GaInAsP d'épaisseur 0.15 µm dopée n (∼10¹⁷ cm⁻³) ou non, d'une couche 20, 22 d'InP d'épaisseur 0.8 µm non intentionnellement dopée afin d'éviter l'absorption due aux couches dopées p, d'une couche 24 d'InP d'épaisseur 0.7 µm dopée p graduellement (∼5 10¹⁷ à 2 10¹⁸ cm⁻³), et d'une couche supplémentaire de GaInAsP d'épaisseur 0.1 µm dopée p+ (∼plusieurs 10¹⁹ cm⁻³) afin d'assurer un bon contact ohmique lors du dépôt des électrodes nécessaire à la réalisation de structures actives. La composition du matériau quaternaire a été choisie pour correspondre à la longueur d'onde de 1.25 µm et être en accord de maille sur Inp.

Le ruban 22 associé à cette troisième structure avait une largeur constante de 4 µm, aussi bien dans les segments de couplage que dans le segment actif. Les pertes internes à cette structure étaient inférieures à 1dB/cm et les pertes de couplage inférieures à 1dB par face en utilisant des fibres optiques lentillées de rayon de courbure 10 µm.

## Revendications

1. Composant actif semiconducteur comprenant une structure guidante (16, 18, 20, 22) incluant une structure de coeur (18) comportant au moins trois couches à haut indice (30, 34, 38) présentant des indices de réfraction accrus par rapport aux milieux environnants (16, 32, 36, 20), ces couches à haut indice étant séparées par des couches de dilution (32, 36) à indice de réfraction plus faible et à épaisseurs plus grandes telles qu'une lumière puisse être guidée avec l'aide de cette structure de coeur selon un mode guidé unique, une partie au moins de la longueur de cette structure guidante constituant un segment actif (S2) dans lequel ces couches à haut indice constituent des couches actives aptes à faire subir une interaction optoélectronique à cette lumière, ladite structure guidante s'étendant jusqu'à une face extrême (8) de ce composant pour permettre de coupler ce composant à un élément optique (12) externe à ce composant et placé au regard de cette face extrême, cette face extrême constituant une face de couplage,
ce composant étant caractérisé par le fait que ladite structure de coeur s'étend jusqu'à ladite face de couplage (8), lesdites couches à haut indice de cette structure présentant des épaisseurs individuelles comprises entre 30 nm et 300 nm, ladite structure guidante ayant des couches (22,24) en forme de ruban formées sur la structure guidante et arrangées pour supporter un mode guidé unique jusqu'à cette face de couplage.

2. Composant selon la revendication 1, ce composant comportant une plaquette semiconductrice (2) présentant une face supérieure (4) et une face inférieure (6) et s'étendant entre deux faces extrêmes (8 et 10) selon une direction longitudinale, l'une au moins de ces faces extrêmes constituant une dite face de couplage, cette plaquette comportant des couches mutuellement superposées se succédant en continuité cristalline en constituant des structures incluant chacune une couche ou plusieurs couches adjacentes, les compositions, les épaisseurs et l'ordre de succession des couches d'une telle structure constituant une séquence de couches de cette structure, cette plaquette comportant successivement à partir de sa face inférieure :
- une structure de base (16) présentant un premier type de conductivité, au moins une partie supérieure de cette structure étant constituée par une couche de confinement inférieure (16) transparente pour ladite lumière,
- ladite structure de coeur (18), cette structure étant transparente pour ladite lumière,
- une couche de confinement supérieure (20, 22) transparente pour ladite lumière et coopérant avec ladite couche de confinement inférieure et cette structure de coeur pour constituer ladite structure guidante (16, 18, 20, 22), cette structure guidante s'étendant longitudinalement sans changement de sa séquence de couches dans ledit segment actif (S2) et jusqu'à ladite face de couplage (8, 10), au moins une couche de cette structure guidante étant limitée en largeur sur au moins une partie de son épaisseur pour former un ruban longitudinal (22), et
- une couche de commande (24) formée sur la couche de confinement supérieure (20, 22) au moins dans ledit segment actif (S2), cette couche de commande ayant un deuxième type de conductivité opposé au premier avec une concentration de dopage rendant cette couche de commande absorbante pour ladite lumière,
- ledit composant comportant encore des électrodes inférieure (26) et supérieure (28) formées respectivement sur lesdites faces inférieure et supérieure dans ledit segment actif (S2).

3. Composant selon la revendication 2, caractérisé par le fait que la séquence de couches de la structure guidante (16, 18, 20, 22) confère à un taux de confinement de cette structure une valeur supérieure à 70%, ce taux de confinement étant le rapport de la puissance dudit mode guidé présente dans l'épaisseur de ladite structure de coeur (18) à la puissance totale de ce mode.

4. Composant selon la revendication 2, caractérisé par le fait que la séquence de couches de la structure guidante (16, 18, 20, 22) confère audit mode guidé une épaisseur comprise entre 1 µm et 2 µm.

5. Composant selon la revendication 4, caractérisé par le fait que lesdites couches à haut indice (30, 34, 38) présentent par rapport aux dites couches diluantes (32, 36) et de confinement (16, 20, 22), un écart d'indice de réfraction supérieur à 0,15, un rapport de dilution étant constitué par le rapport de l'épaisseur totale de la structure de coeur (18) à l'épaisseur totale des seules couches à haut indice, ce rapport de dilution étant supérieur à 2.

6. Composant selon la revendication 2, caractérisé par le fait qu'une structure globale incluant toutes les couches semiconductrices (16...24) de ladite plaquette (2) présente une séquence de couches constante dans ledit segment actif (S2) et jusqu'à ladite face de couplage (8, 10).

7. Composant selon la revendication 6, caractérisé par le fait que ladite plaquette (2) présente en outre selon sa longueur un premier et un deuxième segments de couplage (S1 et S3) s'étendant entre d'une part ledit segment actif (S2) d'autre part une première et une deuxième dites faces de couplage (8 et 10) respectivement, au moins l'une desdites électrodes (28) étant formée seulement dans ledit segment actif.

8. Composant selon la revendication 7, caractérisé par le fait que la largeur dudit ruban (22) diminue progressivement dans au moins un dit segment de couplage (S1, S3) à partir dudit segment actif (S2) jusqu'à ladite face de couplage (8, 10).

9. Composant selon la revendication 6 dans lequel ladite couche limitée au moins partiellement selon la direction transversale est ladite couche de confinement supérieure, ladite couche de commande et ladite électrode supérieure étant présentes seulement dans l'étendue dudit ruban (22) pour constituer une structure guidante à ruban gravé.

## Patentansprüche

1. Aktives Halbleiterbauelement mit einer Führungsstruktur (16, 18, 20, 22), die eine Kernstruktur (18), die wenigstens drei Hochindexschichten (30, 34, 38) mit in Bezug auf die umgebenden Medien (16, 32, 36, 20) erhöhten Brechungsindizes aufweist, wobei diese Hochindexschichten durch Verdünnungsschichten (32, 36) mit niedrigerem Brechungsindex und größeren Dicken getrennt sind, so dass ein Licht mit Hilfe dieser Kernstruktur in einer einzigen geführten Mode geführt werden kann, wobei wenigstens ein Teil der Länge dieser Führungsstruktur ein aktives Segment (S2) bildet, in dem diese Hochindexschichten aktive Schichten bilden, die in der Lage sind, dieses Licht einer optoelektronischen Wechselwirkung zuzuführen, wobei die Führungsstruktur sich bis zu einer Endfläche (8) dieses Bauelements erstreckt, um zu ermöglichen, dieses Bauelement an ein zu diesem Bauelement externes und dieser Endfläche zugewandt angeordnetes optisches Element (12) zu koppeln, wobei diese Endfläche eine Kopplungsfläche bildet,
**dadurch gekennzeichnet**, dass die Kernstruktur sich bis zu der Kopplungsfläche (8) erstreckt, dass die Hochindexschichten dieser Struktur einzelne Dicken zwischen 30 nm und 300 nm aufweisen, dass die Führungsstruktur stegförmige, auf der Führungsstruktur gebildete Schichten (22, 24) aufweist, die angeordnet sind, um eine einzige geführte Mode bis zu dieser Kopplungsfläche zu tragen.

2. Bauelement nach Anspruch 1, mit einer Halbleiterplatte (2), die eine obere Fläche (4) und eine untere Fläche (6) aufweist und sich zwischen zwei Endflächen (8 und 10) in einer longitudinalen Richtung erstreckt, wobei wenigstens eine dieser Endflächen eine sogenannte Kopplungsfläche bildet, wobei diese Platte einander überlagerte Schichten umfasst, die in kristalliner Kontinuität aufeinanderfolgen und dabei Strukturen bilden, die jeweils eine oder mehrere benachbarte Schichten enthalten, wobei die Zusammensetzungen, die Dicken und die Aufeinanderfolge der Schichten einer solchen Struktur eine Schichtfolge dieser Struktur bilden, wobei die Platte nacheinander ausgehend von ihrer unteren Fläche umfasst:
- eine Basisstruktur (16), die einen ersten Typ von Leitfähigkeit aufweist, wobei wenigstens ein oberer Bereich dieser Struktur durch eine untere Einschließungsschicht (16) gebildet ist, die für das Licht transparent ist,
- die Kernstruktur (18), wobei diese Struktur für das Licht transparent ist,
- eine obere Einschließungsschicht (20, 22), die für das Licht transparent ist und mit der unteren Einschließungsschicht und dieser Kernstruktur zusammenwirkt, um die Führungsstruktur (16, 18, 20, 22) zu bilden, wobei diese Führungsstruktur sich longitudinal ohne Änderung ihrer Schichtfolge in dem aktiven Segment (S2) und bis zu der Kopplungsfläche (8, 10) erstreckt, wobei wenigstens eine Schicht dieser Führungsstruktur in der Breite auf wenigstens einem Teil ihrer Dicke begrenzt ist, um einen longitudinalen Stegm(22) zu bilden, und
- eine Steuerschicht (24), die auf der oberen Einschließungsschicht (20, 22) wenigstens in dem aktiven Segment (S2) gebildet ist, wobei diese Steuerschicht einen zweiten Typ von Leitfähigkeit entgegengesetzt zu dem ersten mit einer Dotierungskonzentration hat, die diese Steuerschicht für das Licht absorbierend macht,
- wobei das Bauelement ferner untere (26) und obere Elektroden (28) umfasst, die jeweils an der unteren bzw. oberen Fläche in dem aktiven Segment (S2)gebildet sind.

3. Bauelement nach Anspruch 2, dadurch gekennzeichnet, dass die Schichtfolge der Führungsstruktur (16, 18, 20, 22) dieser Struktur einem Einschließungsverhältnis einen Wert von über 70% gibt, wobei dieses Einschließungsverhältnis das Verhältnis der Leistung der geführten Mode, die in der Dicke der Kernstruktur (18) vorhanden ist, zur Gesamtleistung dieser Mode ist.

4. Bauelement nach Anspruch 2, dadurch gekennzeichnet, dass die Schichtfolge der Führungsstruktur (16, 18, 20, 22) der geführten Mode eine Dicke zwischen 1 µm und 2 im gibt.

5. Bauelement nach Anspruch 4, dadurch gekennzeichnet, dass die Hochindexschichten (30, 34, 38) im Verhältnis zu den Verdünnungsschichten (32, 36) und Einschließungsschichten (16, 20, 22) eine Brechungsindex-Differenz von mehr als 0,15 und ein Verdünnungsverhältnis, gebildet durch das Verhältnis der Gesamtdicke der Kernstruktur (18) zur Gesamtdicke der Hochindexschichten allein, von mehr als 2 hat.

6. Bauelement nach Anspruch 2, dadurch gekennzeichnet, dass eine Gesamtstruktur, die alle Halbleiterschichten (16, ... 24) der Platte (2) umfasst, eine konstante Schichtfolge in dem aktiven Segment (S2) und bis zur Kopplungsfläche (8, 10) aufweist.

7. Bauelement nach Anspruch 6, dadurch gekennzeichnet, dass die Platte (2) ferner in ihrer Längsrichtung ein erstes und ein zweites Kopplungssegment (S1 und S3) aufweist, die sich zwischen einerseits dem aktiven Segment (S2) und andererseits einer ersten bzw. einer zweiten Kopplungsfläche (8 bzw. 10) erstrecken, wobei wenigstens eine der Elektroden (28) nur in dem aktiven Segment gebildet ist.

8. Bauelement nach Anspruch 7, dadurch gekennzeichnet, dass die Breite des Steges (22) in wenigstens einem sogenannten Kopplungssegment (S1, S3) vom aktiven Segment (S2) aus bis zur Kopplungsfläche (8, 10) allmählich abnimmt.

9. Bauelement nach Anspruch 6, bei dem die wenigstens teilweise in der transversalen Richtung begrenzte Schicht die obere Einschließungsschicht ist, wobei die Steuerschicht und die obere Elektrode nur in der Ausdehnung des Steges (22) vorhanden sind, um eine Führungsstruktur mit geätztem Steg zu bilden.

## Claims

1. Semiconductor active component including a guide structure (16, 18, 20, 22) including a core structure (18) comprising at least three high index layers (30, 34, 38) with a refractive index increased relative to their surroundings (16, 32, 36, 20), said high index layers being separated by dilution layers (32, 36) with a lower refractive index and a greater thickness so that light can be guided with the aid of said core structure in a single guided mode, at least a portion of the length of said guide structure constituting an active segment (S2) in which said high index layers constitute active layers that can interact opto-electronically with said light, said guide structure extending as far as an end surface (8) of said component to couple said component to an optical component (12) external to said component and facing said end surface, said end surface constituting a coupling surface,
said component being characterised in that said core structure extends as far as said coupling surface (8), said high index layers of said structure having individual thicknesses in the range 30 nm to 300 nm, said guide structure having layers (22, 24) in the form of strips formed on the guide structure and arranged to support a single guided mode as far as said coupling surface.

2. Component according to claim 1 including a semiconductor wafer (2) having a top surface (4) and a bottom surface (6) and extending in a longitudinal direction between two end surfaces (8 and 10), at least one of said end surfaces constituting a coupling surface, said wafer including stacked layers having a continuous crystal structure and constituting structures each including one layer or a plurality of adjacent layers, the compositions, the thicknesses and the order of succession of the layers of a structure of this kind constituting a sequence of layers of said structure, said wafer including in succession from said bottom surface:
- a base structure (16) having a first type of conductivity, at least an upper part of said structure being constituted by a bottom confinement layer (16) transparent to said light,
- said core structure (18) transparent to said light,
- a top confinement layer (20, 22) transparent to said light and cooperating with said bottom confinement layer and said core structure to constitute a guide structure (16, 18, 20, 22), said guide structure extending longitudinally without changing the sequence of layers in said active segment (S2) and as for as said coupling surface (8,10), at least one layer of said guide structure being delimited in the transverse direction over at least part of its thickness to form a longitudinal strip (22), and
- a control layer (24) formed on the top confinement layer (20, 22) at least in said active segment (S2), this control layer having a second type of conductivity opposite to the first type with an increased dopant concentration causing this control layer to absorb said light,
- said component further including bottom and top electrodes (26, 28) respectively formed on said bottom and top surfaces in said active segment (S2).

3. Device according to claim 2 wherein the sequence of layers of the guide structure (16, 18 ,20, 22) gives this structure a confinement ratio exceeding 70%, the confinement ratio being the ratio of the power of said guided mode within the thickness of said core structure (18) to the total power of this mode.

4. Device according to claim 2 wherein the sequence of layers of the guide structure (16, 18, 20, 22) confers a thickness of between 1 µm and 2 µm on said guided mode.

5. Device according to claim 4 wherein said high index layers (30, 34, 38) and said dilutant layers (32, 36) and confinement layers (16, 20, 22) have a refractive index difference exceeding 0.15, a dilution ratio being defined by the ratio of the total thickness of the core structure (18) to the total thickness of the high index layers alone, this dilution ratio being greater than 2.

6. Device according to claim 2 wherein a global structure including all the semiconductor layers (16 through 24) of said wafer (2) has a constant sequence of layers within said active segment (S2) and as far as said coupling surface (8, 10).

7. Device according to claim 6 wherein said wafer (2) also has along its length first and second coupling segments (S1 and S3) extending between said active segment (S2) and said first and second coupling surfaces (8 and 10), respectively, at least one of said electrodes (28) being formed only in said active segment.

8. Device according to claim 7 wherein the width of said strip (22) decreases progressively in at least one coupling segment (S1, S3) from said active segment (S2) as far as said coupling surface (8, 10).

9. Device according to claim 6 wherein said layer delimited at least partially in the transverse direction is said top confinement layer, said control layer and said top electrode being present only in the area of said strip (22) to constitute an etched strip guide structure.
